# EUROPÄISCHE PATENTSCHRIFT

(11) **EP 1 273 738 B1**
(45) Veröffentlichungstag und Bekanntmachung des Hinweises auf die Patenterteilung: **16.12.2009**
(21) Anmeldenummer: 02006306.1
(22) Anmeldetag: 21.03.2002
(51) Int. Cl.: E04G 9/02, B32B 7/06

(54) **Schalungselement und Verfahren zum Reparieren desselben**
Formwork and method of repairing it
Elément de coffrage et procédé pour le réparer

(30) Priorität: 22.03.2001 DE 10114161
(43) Veröffentlichungstag der Anmeldung: 08.01.2003
(73) Patentinhaber: Hünnebeck Group GmbH, 40885 Ratingen (DE)
(72) Erfinder: Schlenker, Jürgen, 40885 Ratingen (DE)
(74) Vertreter: Gille Hrabal Struck Neidlein Prop Roos

(56) Entgegenhaltungen:
- EP-A- 0 035 251
- EP-A- 0 250 730
- EP-A- 0 574 786
- WO-A-93/07205
- CH-A- 669 558
- DE-A- 3 729 875
- DE-A- 4 015 454
- DE-A- 19 640 115
- FR-A- 2 690 221
- US-A- 3 240 618

## Beschreibung

Die Erfindung betrifft ein Schalungselement, insbesondere für die Errichtung von Betonbauwerken, mit einer plattenförmigen Schaltafel, welche an oder in einem Rahmen angeordnet ist. Außerdem betrifft die Erfindung ein Verfahren zum Herstellen und insbesondere zum Erneuern bzw. zum Reparieren derartiger Schalungselemente.

Es ist bekannt (DE PS 2848154), Schalungselemente bzw. Schalplatten aus Holz, beispielsweise Sperrholz, herzustellen. Derartige Schalungselemente haben den Nachteil, dass sie durch eindringende Feuchtigkeit aufquellen. Bei starker Beanspruchung wird die schützende Imprägnierschicht zerstört, und die Oberfläche fasert auf. Daher bietet sie einen zusätzlichen Angriffspunkt für eindringendes Wasser. Auch führen Nagellöcher, die beim Gebrauch in das Schalungselement eingeschlagen werden, zu Beschädigungen der Furnierschicht oder der schützenden Imprägnierschicht, sodass dort ebenfalls Wasser eindringen kann. Schließlich führen Transport und Handhabung der bekannten Schalungselemente im rauen Baustellenbetrieb zu Beschädigungen der mit dem Beton zu erstellenden Oberflächen im Sichtbereich der Schalhaut.

Die Lebensdauer derartiger, aus Sperrholz bestehender Schalungselemente ist somit begrenzt.

Bekannte Schalungselemente wie Schaltafeln kann man reparieren, beispielsweise durch Ausspachteln kleiner Beschädigungen oder gar durch Implementieren von Reparaturplättchen bei größerflächigen Beschädigungen. Die Sperrholzplatte wird hierdurch jedoch in ihrer Oberfläche strukturiert, was beim Errichten bzw. Herstellen von Betonoberflächen unerwünscht ist,

Aus Kunststoff bestehende bekannte Schalungselemente (EP 0250730B1 und DE 3804506A1) zeigen zwar auch bei Beschädigungen kein Quellverhalten durch eindringendes Wasser wie Sperrholzplatten, müssen aber ebenso wie Sperrholzplatten aufwendig und manuell im Sichtbereich repariert werden, wenn sie im Gebrauch und insbesondere an der Oberfläche beschädigt wurden.

Nach dem Reinigen der Schalungselemente bzw. Schalplatten mittels einem Hochdruckwasserstrahl oder mittels rotierender Bürsten müssen an der Oberfläche vorhandene Kratzer, Nagellöcher und Bohrlöcher ausgebessert werden. Bekannt ist es, thermoplastische Kunststoffe durch Auftragsschweißen mit einem Handschweißgerät auszubessern. Anschließend muss die so gefüllte Schadstelle mit einer von Hand zu führenden Oberfräse wieder eben gefräst werden, Durchbohrungen und flächige Beschädigungen müssen sauber ausgefräst und mit Kunststoffplättchen geschlossen werden.

Bei Schalungselementen aus duroplastischen Kunststoffen sind dieselben Instandsetzungsmaßnahmen wie bei einer Sperrholzplatte notwendig.

Trotz sorgfältigster Ausführung von Reparaturmaßnahmen zeichnen sich diese immer wieder an der Oberfläche der mit Hilfe dieser Schalungselemente hergestellten Betonbauwerke sichtbar ab.

Vielfach werden Schalungselemente für anstehende Bauprojekte bei den Herstellern und Lieferanten solcher Schalungselemente angemletet. Ein Großteil der benutzten Schalungselmente wird also nicht mehr gekauft und bei Bedarf im eigenen Haus repariert, sondern bedarfsgerecht und voll funktionsfähig gemietet. Der Mieter erwartet eine intakte Oberfläche der Schalhaut ohne Oberflächenstrukturen, und zwar auch bei zuvor von Dritten benutzten Schalungselementen, Der Vermieter muss daher Beschädigungen der Schalungselemente vor dem erneuten Vermieten ausbessern, was nicht nur umständlich ist, sondern auch erhebliche Kosten verursacht.

EP-A-0 035 251 betrifft mit einer Folie überzogene Formtelle, wobei zwischen Folie und Formteil ein Kleber vorgesehen ist. Dieser ist thermoaktivierbar und vernetzbar, so dass er durch Wärmeeinbringung nicht erneut aufgeschmolzen werden kann.

FR-A-2 690 221 betrifft eine Schalplatte mit einer Schalhaut, die mittels hitzeaktivierbarem PU-Kleber befestigt ist, wobei eine Lösbarkeit der Verbindung nicht vorgesehen ist.

DE 196 40 115 A betrifft ebenfalls eine Schalplatte, bei der eine Metallmatte zum Auf- oder Einkaschieren in geschmolzenes Kunststoff-Recyclat mit einem vernetzbaren Heißschmeizkieber beschichtet wird, Da der Kleber vernetzt, ist er nicht wieder aufschmelzbar.

CH 669 558 A offenbart eine Polyethylen-Sandwlchplatte mit einer Deckplatte, bei der der Polyethylen-Schaumstoffkern oberflächlich beflammt wird, um ihn mit der Deckplatte zu verbanden. Das Trennen der Deckplatte unter Wärmeeinwirkung ist daher nur sehr unkontrolliert, nicht beliebig oft und nicht reproduzierbar möglich.

Der Erfindung liegt die Aufgabe zugrunde, die beschädigte Schalhaut bzw. Oberfläche eines Schalungselementes in einfacher Weise kostengünstig so wiederverwendbar gestalten zu können, dass sie allen betrieblichen Anforderungen gerecht wird und sich auf der dem Beton eines eingeschalten Bauwerkes zugewandten Oberfläche der Schalhaut keine Fehler- bzw. Schwachstellen abzeichnen.

Diese Aufgabe wird erfindungsgemäß mit einem Schalungselement gelöst, welches die Merkmale des Anspruches 1 aufweist. Vorteilhafte Ausgestaltungen und Weiterbildungen dieses Schalungselementes sind Gegenstand der auf diesen Anspruch rückgezogenen abhängigen Unteransprüche.

Außerdem wird diese Aufgabe erfindungsgemäß mit einem Verfahren gelöst, welches die Merkmale des ersten Verfahrensanspruchs aufweist, Vorteilhafte Ausgestaltungen und Weiterbildungen dieses Verfahrens sind Gegenstand der auf den ersten Verfahrensanspruch rückbezogenen abhängigen Unteransprüche. Außerdem ist eine Verwendung angegeben.

Erfindungsgemäß kann, die als Oberfläche vorgesehene beschädigte Schalhaut bzw. Schalfolie der Schaltafel eines mehrschichtigen Scholungselementes In einfacher Weise ausgetauscht und erneuert werden, Beispielsweise lassen sich Schalungselemente einer Modulrahmenschalung auf diese Weise für die Wiederverwendung präparieren. Zum Auswechseln der Schalhaut oder Schalfolie wird diese gezielt vom Trägersystem bzw. der Schaltafel gelöst und entfernt, ohne das Trägersystem selbst unbrauchbar zu machen und zu beschädigen. Nach dem Entfernen der verschlissenen und beschädigten Schalfolie wird auf die wiederverwendbare Schaltafel eine neue Schalfolie aufgebracht und an dieser befestigt. Beschädigungen der Schaltafel bzw. des Trägersystems zeichnen sich wegen der aufgebrachten neuen vollflächigen Schalfolie oder Schalhaut nicht auf der Oberfläche des Schalungselementes ab.

Gemäß der Erfindung kann ein mehrschichtiges Schalungselement mit angemessenem Fertigungsaufwand unter Vermeidung zeitintensiver Reparaturund Ausbesserungsarbeiten der Schalhaut zur Wiederverwendung geeignet gemacht werden, ohne dass sich auf der Oberfläche des Schalungselementes störende Oberflächenstrukturen abzeichnen. Es werden also verkratzte oder sonst wie beschädigte Oberflächen von Schalungselementen durch neue Schalhäute oder Schalfolien ersetzt.

Mit anderen Worten wird erfindungsgemäß das ausgebildete Schalungselement auf der dem Beton zugewandten Seite mit einer neuen Schalfolie beschichtet. Das erfindungsgemäße Schalungselement besteht daher aus wenigstens zwei Haupt- Funktionselementen, nämlich einem Trägersystem bzw. der Schaltafel und einer Schalfolie bzw. Schalhaut, welche zerstörungsfrei vom Trägersystem gelöst und damit ausgetauscht werden kann. Die Schalfolie bildet die eigentliche Kontaktfläche zum Beton und ist für die Oberflächenstrukturierung sowie die Oberflächenqualität des Betons verantwortlich. Das Trägersystem bzw. die Schaltafel selbst ist so ausgebildet, dass es bzw. sie die erforderliche Tragfähigkeit liefert. Dabei können auch mehrschichtige Systeme verwendet werden, um die Schaltafel bzw. das Trägersystem zu verstärken.

Die erfindungsgemäßen Schalungselemente können je nach der Höhe der mechanischen Belastung beispielsweise jeweils einen drei- oder fünfschichtigen Aufbau aufweisen, jedoch ist auch ein zwei-, vier- oder mehrschichtiger Aufbau möglich. Als Werkstoff für das Trägersystem bzw. die Schaltafel werden Kunststoffe mit und ohne Verstärkungen oder auch Holzstoffe wie Sperrholz oder Spanplatten eingesetzt. Auch metallische Werkstoffe, insbesondere Stahl, Aluminium und andere Werkstoffe, sind denkbar. Für die Schalungselemente, insbesondere bei Wandschalungen und -stützen, muss eine ausreichende Steifigkeit gegeben sein. Das Trägersystem kann daher, wenn notwendig, durch eine Metallfolie oder auch durch Fasern verstärkt werden.

Die Schalfolie kann eine Folie oder Platte aus Kunststoff, vorzugsweise Polypropylen (PP), Polyethylen (PE) und/oder Polyvinylchlorid (PVC) sein.

Das erfindungsgemäße Schalungselement ist konstruktiv als Verbundkonstruktion ausgebildet. Die einzelnen Funktionsschichten werden durch Klebstoffe miteinander verbunden. Die Haftfestigkeit der Klebverbindungen wird durch Adhäsion und Kohäsion hervorgerufen. Kohäslonskräfte bewirken hierbei sowohl den inneren Zusammenhalt des Klebstoffes als auch des Fügeteils bzw. Verbundpartners oder Substrats. Der Zusammenhalt zwischen Kleber und Fügeteil wird durch Adhäsionskräfte hervorgerufen.

Bei der Adhäsion wird in mechanische und in spezifische Adhäsion unterteilt.

Die mechanische Adhäsion entsteht durch eine Verankerung des Klebstoffes in den Poren des Fügeteils (besonders wirksam bei Materialien wie geschäumtembzw. faserverstärktem Kunststoff, GMT, Holz, insbesondere Sperrholz). Dabei beruht die spezifische Adhäsion auf zwischenmolekularen Nebenvalenzkräften. Hier werden die Klebstoffe sinnvollerweise nach der Art des Abbindemechanismus in zwei große Gruppen eingeteilt:
a) Physikalisch abbindende Klebstoffe:
   Lösungsmittelklebstoffe, Dispersionsklebstoffe, Schmelzklebstoffe
   und Kontaktkiebstoffe
b) Chemisch abbindende Klebstoffe:
   Polymerisationsklebstoffe, Polyadditionsklebstoffe,
   Polykondensationsklebstoffe

Zu a) Physikalisch abbindende Klebstoffe:
   Bei den Lösungs- und Dispersionsklebstoffen werden die Klebstoffe zur Erzielung einer guten Benetzung in organischen Lösungsmitteln gelöst oder in Wasser dispergiert aufgetragen. Vor den eigentlichen Kleben muss das Lösungs- oder Dispersionsmittel, beispielsweise durch Verdunstung oder durch Aufnahme im Substrat, abgeführt werden. Bei Lösungsmitteln ist auf eine Verträglichkeit mit dem Substrat zu achten, weil sonst das Fügeteil in seinen Eigenschaften nachteilig verändert werden könnte, beispielsweise durch Spannungsrisskorrosion.
   Die Schmelzeklebstoffe werden als plastifizierte Masse aufgetragen und die Klebung erfolgt unmittelbar durch Unterschreiten der Schmelz- und Fließtemperatur.
   Kontaktklebstoffe enthalten meist Lösungsmittel, die vor dem Fügen verdunsten müssen. Die Klebung kann erst vorgenommen werden, wenn sich der Klebstoff trocken anfühlt. Nach dem Zusammenlegen ist keine Korrektur mehr möglich. Es gibt auch Kontaktklebstoffe, welche keine Lösungsmittel enthalten. Diese Kontaktklebstoffe werden für Heftpflaster, selbstklebende Folien, Haftetiketten u.s.w. genutzt. Aufgrund geringer Kohäsionskräfte ist ein mehrmaliges Trennen der Verbindung möglich.
Zu b) Chemisch abbindende Klebstoffe:
   Die Klebung bei chemisch abbindenden Klebstoffen beruht auf der Bildung von Makromolekülen infolge einer chemischen Reaktion. Die Reaktion beruht, je nach Klebstoff, auf einer Polymerisation, Polyaddition oder Polykondensation, und es entstehen meist vernetzte Makromoleküle. Durch sogenannte Reaktionsmittel (Härter, Beschleuniger), durch Wärme oder auch durch Luftfeuchtigkeit wird diese Reaktion in Gang gesetzt. Bei Zwei- oder Mehrkomponentensystemen finden Reaktionsmittel ihren Einsatz. Eine exakte Mischung dieser Systeme ist Voraussetzung für vollständiges Aushärten.

Insbesondere für polyolefinische Werkstoffe (PP,PE) oder auch manche metallische Werkstoffe ist es notwendig, die Klebung durch sogenannte Haftvermittler zu verbessern. Haftvermittler sind in Ergänzung zu Oberflächenbehandlungen im Einsatz, die in Form mechanischer und/oder chemischer Verfahren dazu dienen, die Ausbildung von physikalischen und chemischen zwischenmolekularen Kräften entweder zu ermöglichen oder zu verstärken. Haftvermittler werden oftmals auch als "chemische Brücken" bezeichnet und entweder auf die Fügeteileoberflächen aufgetragen oder dem Klebstoff zugesetzt. Sie führen zu einer Verbesserung der Festigkeit der Klebungen. Der Haftvermittler soll die Wirkung der üblichen chemischen Oberflächenbehandlungen ergänzen oder in Kombination mit mechanischen Verfahren eventuell ersetzen.

Gegenstand der vorliegenden Erfindung ist der Wiederbeschichtungsprozess unter den besonderen Gesichtspunkten im Einsatz des Re-Use-Service. Hier erfordert der Einsatz einen automatisierten Prozess zum Lösen der Schalfolie und dem anschließenden Wiederbeschichten. Hierzu wird beispielsweise das erfindungsgemäße Schalungselement einer kontinuierlich arbeitenden Wiederbeschichtungsanlage zugeführt. Hierbei wird in zwei unterschiedliche Beschichtungstechniken unterschieden, und zwar das Wiederbeschichten von kompletten Modulrahmen-Schalungselementen ohne vorherige Trennung der Schalhaut vom Rahmensystem und in die Wiederbeschichtung einzelner Schalhäute.

Die Wiederbeschichtung des gesamten Modulrahmen-Schalungselementes führt zu einer wesentlichen Reduzierung der Reinigungs- und Reparaturkosten, da zudem der Schalhautaus- und einbau entfällt. Die gesäuberten Modulrahmen-Schalungselemente werden ihrer Breite und Höhe nach vorkonfektioniert und anschließend der Wiederbeschichtungsanlage zugeführt. Es ist auch möglich, den Reinigungsvorgang in die Wiederbeschichtungsanlage zu integrieren. Im anschließenden Ablöseprozess wird die Schalfolie von dem Trägersystem getrennt. Bleibt das Trägersystem während des gesamten Ablöse- und Wiederbeschichtungsprozess mit dem Rahmen verbunden, sind Befestigungselemente wie Niete oder Schrauben zwischen Trägersystem und Rahmen so ausgelegt, dass diese den Wiederbeschichtungsprozess nicht negativ beeinflussen.

Der Kleber und/oder Haftvermittler zwischen der Schalfolie und Verstärkung oder Trägersystem wird durch Zufuhr von Energie in schmelzflüssigen Zustand gebracht, sodass die Schalfolie mittels einer Trennvorrichtung von der Verstärkung oder dem Trägersystem entfernt werden kann. Die Energie kann durch die unterschiedlichen Arten der Wärmeübertragung, also durch Konvektion, Wärmeleitung, Wärmestrahlung, innere Reibung und/oder äußere Reibung in die Kleber- und/oder Haftvermittlerschicht eingebracht werden, insbesondere durch Warmgas, Heizelemente, IR-Strahler, IR-Laser, im Hochfrequenz-Feld oder Mikrowellen. Die Oberfläche des Trägersystems oder der Verstärkung wird gereinigt und eine neue Kleberschicht und/oder Haftvermittlerschicht mittels Walzen oder Düsen auf der Oberfläche des Trägersystems oder der Verstärkung appliziert. Anschließend wird eine neue Schalfolie auf das Trägersystem bzw. die Schaltafel mittels der Wiederbeschichtungsvorrichtung aufgebracht.

Der Wiederbeschichtungsprozess einzelner Schalhäute unterscheidet sich nicht von der Funktionsweise des vorher beschriebenen Prozesses und der zugehörigen Anlagentechnik. Nur werden die Schalhäute vor Prozessbeginn vom Rahmen getrennt und der Anlage separat zugeführt.

### Beispiel

Das nachfolgende Beispiel zeigt die erfindungsgemäße Herstellung bzw. Wiederherstellung oder Erneuerung von Schalhäuten unter Verwendung einer Wiederbeschichtungsvorrichtung.

Mit Hilfe eines Förderbandes werden aneinandergereihte Trägersysteme mit reaktivem isocyanithaltigen Polyurethan als Kleber benetzt, Dies geschieht unter Verwendung einer Schlitzdüse oder einer Auftragswalze. Anschließend werden die mit Kleber beschichteten Trägersysteme unter einer Warmgasdusche durchgeführt, um die Klebezone geeignet vorzubereiten. Hierbei ist darauf zu achten, dass die Werkstoffe des Trägersystems und der Schalfolie nicht thermisch geschädigt werden. Die auftretenden Temperaturen dürfen nicht über der Schmelztemperatur des eingesetzten Kunststoffs, hier im Beispiel geschäumtes Polypropylen 165°C in der Randfaser verstärkt mit einer uni-direktional gerichteten Glasfasermatte, liegen. Des Weiteren würde ein Auf- bzw. Anschmelzen das Lösen der Verstärkungsfasern aus der Matrix bedeuten.

Nach dem Anwärmen wird die separat zugeführte Schalfolie aus Polypropylen mit einer Umlenkwalze unter definiert aufgeprägtem Anpressdruck auf das Trägersystem laminiert. Weitere Druckwalzen erhöhen den Verbund zwischen Schalfolie und Trägersystem. Anschließend lässt man der Klebezone genügend Zeit zum Relaxieren. Die endlos zugeführte Schalhaut wird im nächsten Arbeitsgang entsprechend dem verwendeten Trägersystem konfektioniert und die wiederhergestellte Schalhaut der Vorrichtung entnommen.

Der Ablösevorgang erfolgt in umgekehrter Reihenfolge. Hierzu werden die aneinandergereihten Trägersysteme auf einem Förderband der Ablöseeinheit zugeführt. Unter Zuhilfenahme einer Warmgasdusche werden die Schalfolien von der Oberfläche her erwärmt, um die Klebezone für den Auftrag eines Gurtbandes geeignet vorzubereiten. Das Gurtband ist ein wichtiges Hilfsmitte, welches den Ablösevorgang der Schalfolie von dem Trägersystem ermöglicht. Dies geschieht, indem das Gurtband von einer Vorratsrolle nach der Warmgasdusche der Schalfolie zugeführt und mit der Schalfolie gefügt wird. Hierbei sorgen Andruckwalzen für den notwendigen Verbund zwischen dem Gurtband und der Schalfolie.

Nach dem Aufbringen des Gurtbandes durchläuft das System aus Schalfolie und Träger ein IR-Bestrahlungsfeld, was zur Folge hat, dass sich die Klebeschicht zwischen Schalfolie und Trägersystem auf 120°C erhitzt und somit deaktiviert wird. Bei allen thermischen Prozessen ist darauf zu achten, dass die Werkstoffe des Trägersystems und der Schalfolie nicht geschädigt werden.

Mit Hilfe des Gurtbandes wird nun die Schalfolie von dem Trägersystem abgelöst und über eine Umlenkwalze abgeleitet. Das entschichtete Trägersystem kann nun der Vorrichtung entnommen und einer erneuten Beschichtung zugeführt werden.

In der Zeichnung sind Ausführungsbeispiele der Erfindung schematisch dargestellt, und zwar zeigt
- Fig. 1: einen Teilschnitt durch ein zweischichtiges Schalelement,
- Fig. 2: einen Teilschnitt durch ein dreischichtiges Schalelement,
- Fig. 3: einen Teilschnitt durch ein vierschichtiges Schalelement,
- Fig.4: einen Teilschnitt durch ein fünfschichtiges Schalelement,
- Fig. 5: den Beschichtungsprozess des Trägersystems von der Schalhaut und
- Fig. 6: den Delaminierungsprozess des Trägersystems mit der Schalhaut.

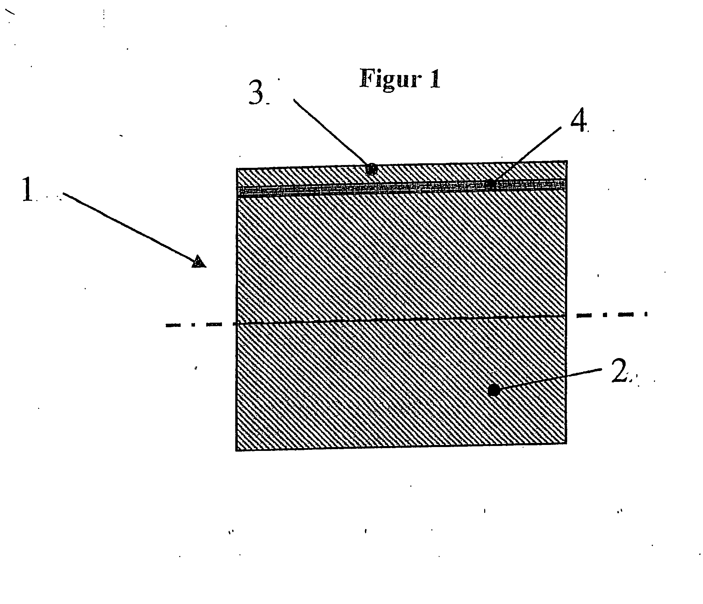

Das in Figur 1 im Teilschnitt dargestellte Schalungselement 1 besteht aus einer als Trägersystem dienenden Schaltafel 2, die einseitig mit einer Schalfolie 3 beschichtet ist. Die Schalfolie 3 ist mittels eines Haftvermittlers wie eines Klebers 4 auf der Schaltafel 2 bzw. der Trägerschicht befestigt.

Das in Figur 1 gezeigte Schalungselement 1 ist asymmetrisch aufgebaut, weil es ein einseitig einzusetzendes Schalungselement ist, das nicht von einem hier nicht dargestellten Rahmensystem gelöst werden sollen, sodass nur die dem Beton zugewandte Seite mit einer Schalfolie 3 beschichtet zu sein braucht.

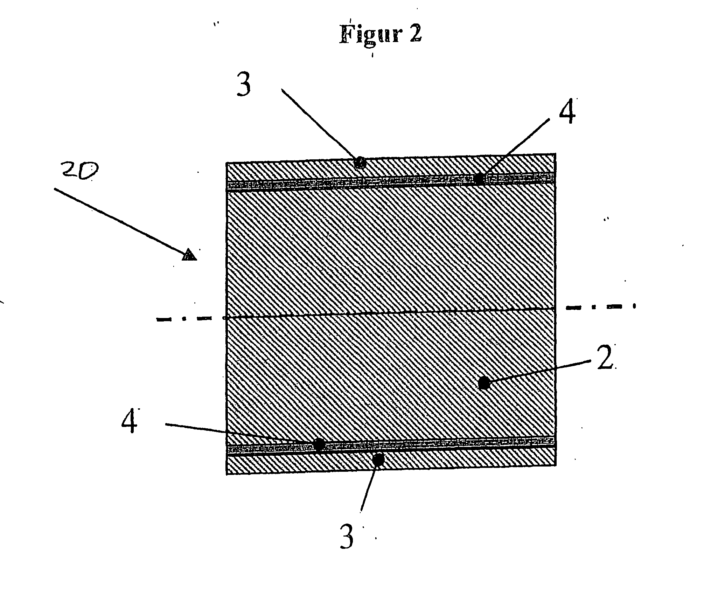

Das in Figur 2 gezeigte Schalungselement 20 ist beidseitig mit Schalfolien 3, die jeweils mit einem Haftvermittler wie einem Kleber 4 auf den beiden Oberflächen der Schaltafel 2 lösbar befestigt sind. Dieses Schalungselement ist doppelseitig einsetzbar, das heißt erfüllt eine Doppelfunktion.

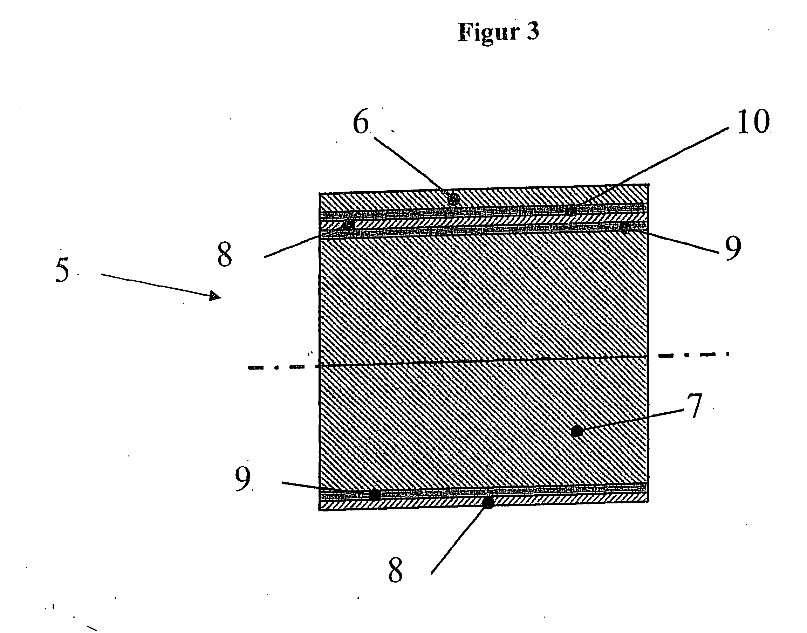

Das in Figur 3 gezeigte Schalungselement 5 ist einseitig mit einer Schalfolie 6 versehen, die mit einer Kleberschicht 10 auf einer Verstärkung 8 lösbar befestigt ist. Diese Verstärkung 8 ist mit einer Kleberschicht 9 au der das Trägersystem bildenden Schaltafel 7 dauerhaft befestigt. Die entgegengesetzte Oberfläche der Schaltafel ist mit einer weiteren aufgeklebten Verstärkung 8 versehen.

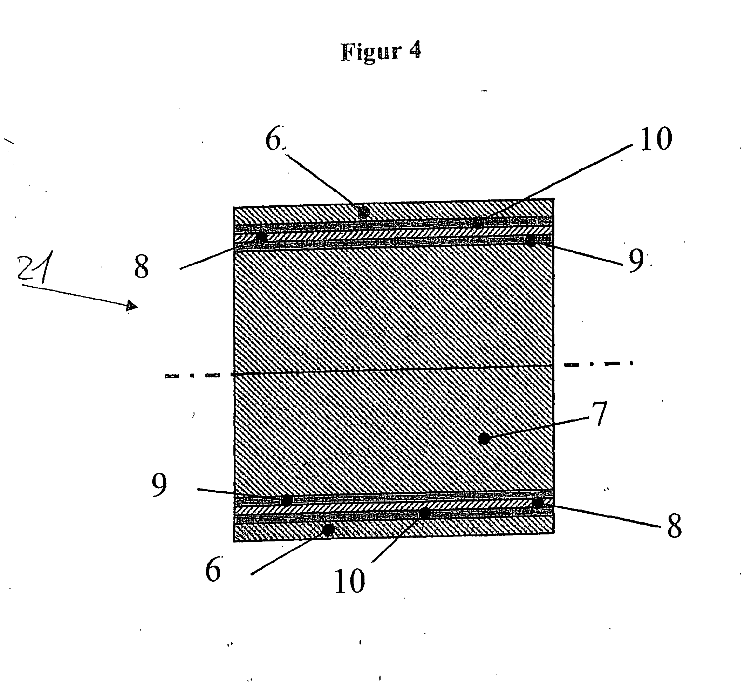

Das in Figur 4 gezeigte Schalungselement 21 ist ebenfalls - wie das Schalungselement aus Figur 2 - mit zwei äußeren Schalfolien 6 versehen, jedoch befindet sich zwischen diesen beiden Schalfolien 6 und der eigentlichen Schaltafel 7 jeweils eine Verstärkung 8, welche eine Fasermatte, eine Gewebematte und/oder eine dünne Metallplatte sein kann. Diese Verstärkungen 8 sind jeweils mit einer Kleberschicht 9 auf der das Trägersystem bildenden Schaltafel 7 befestigt, während die Schalfolien 6 mit einer weiteren Kleberschicht 10 auf der jeweiligen Verstärkung 8 befestigt sind.

Für die Ausführungsformen gemäß Figuren 3 und 4 der vorliegende Erfindung ist es wichtig, dass die Kleberschichten 9 und die Kleberschicht 10 jeweils aus Klebstoffen oder Haftvermittlern besteht, die bei unterschiedlichen Temperaturen deaktiviert werden. Während die Kleberschicht 10 zum Auswechseln der Schalfolien 6 unter Wärmeeinwirkung deaktiviert werden muss, dürfen die Kleberschichten 9 bei den zum Deaktivieren der Kleberschichten 10 erforderlichen Temperaturen nicht deaktiviert werden.

So ist beispielsweise ein Temperaturgefälle zwischen den Deaktivierungstemperaturen der Kleberschichten 9 und 10 von 50° C vorzusehen.

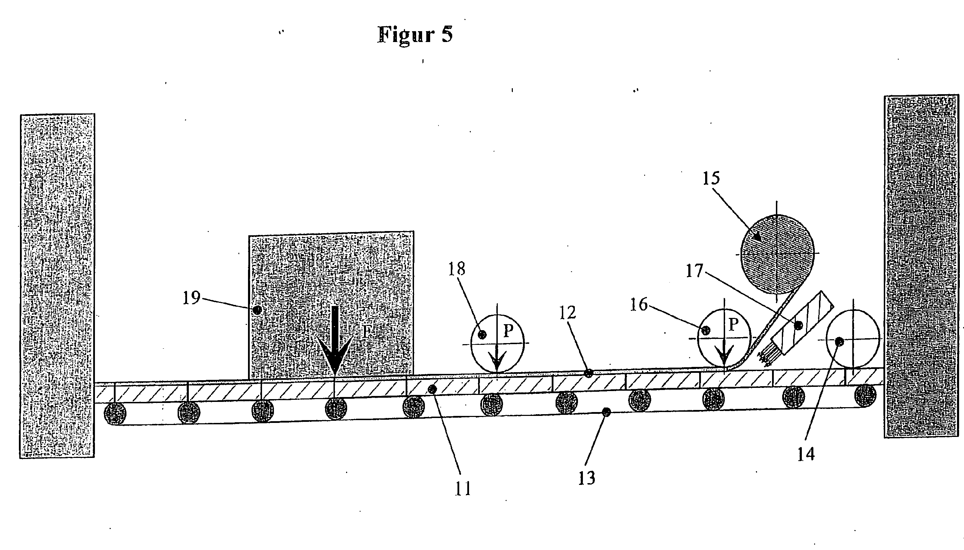

Figur 5 zeigt eine Anlage, mit der Schaltafeln 11 fortlaufend einseitig mit einer Schalfolie 12 beschichtet werden.

Auf ein endloses Förderband 13 werden die Schaltafeln 11 nacheinander unter einer Walze 14 hindurchgeführt, welche Klebstoff auf die Oberseite der Schaltafel 11 aufträgt. Alternativ kann auch eine Schlitzdüse für den Klebstoffauftrag sorgen.

Von einer Rolle 15 wird die Schalfolie 12 auf die Oberseite der Schaltafeln 11 geleitet und mit einer Walze 16 angedrückt. Eine Warmgasdüse 17 sorgt dafür, dass der Klebstoff eine ausreichende Temperatur aufweist, um zunächst die Haftvermittlung herbeizuführen, die zum Ablösen der Schalfolie, nachdem dieselbe verschlissen ist, durch erneute Wärmezufuhr wieder aufgehoben werden kann.

Eine weitere Walze 18 drückt die Schalfolie 17 zur weiteren Verfestigung der Verbindung noch einmal auf die Schaltafeln 11. Danach ist eine Konfektioniereinrichtung 19 vorgesehen, welche dafür sorgt, dass die Schalfolie 12 dauerhaft und unverrückbar auf den einzelnen Schaltafeln 11 haftet. Diese Schaltafeln 11 werden danach in nicht dargestellter Weise voneinander getrennt, um einzeln eingesetzt werden zu können.

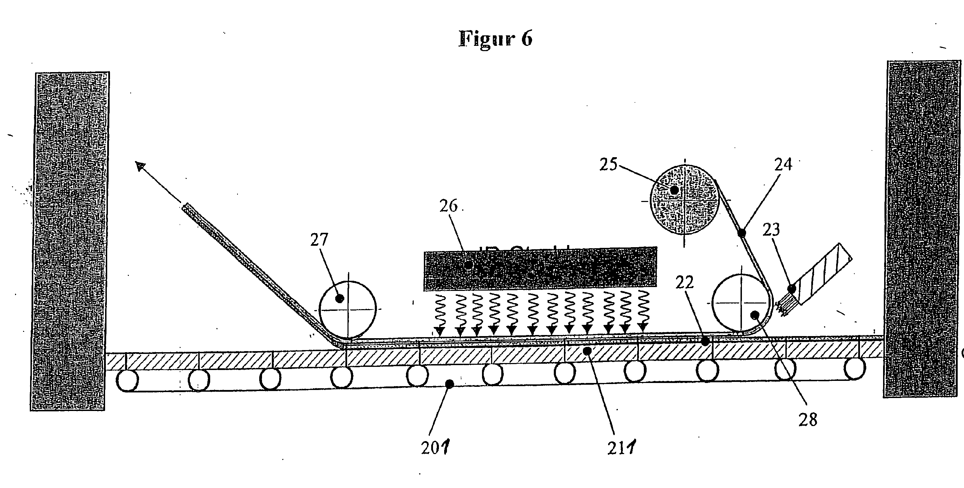

Figur 6 zeigt eine Anlage, mit der Schalfolien fortlaufend von Schaltafeln delaminiert und damit entfernt werden.

Auf ein endloses Förderband 201 werden Schaltafeln 211 aufgelegt und nacheinander unter einer Warmgasdusche 23 hindurchgeführt, welche die Schalfolie 22 an der Oberfläche erhitzt. Hierdurch wird die Oberfläche der Schalfolie für das Fügen mit einem Gurtband 24 vorbereitet. Bei der Erwärmung ist darauf zu achten, dass sich die Schalfolien nicht so stark thermisch erhitzen, dass sie ihre erforderliche mechanische Steifigkeit verlieren oder gar aufschmelzen.

Das Gurtband 24 wird von einer Vorratsrolle 25 abgezogen und mit Hilfe einer Umlenkrolle 28 den Schalfolien zugeführt und entsprechend der Prozessparameter Druck, Temperatur und Zeit auf die Schalfolien gefügt.

Im nächsten Schritt durchläuft das System Schalfolie und Schaltafel ein IR-Bestrahlungsfeld, welches von IR-Strahlern 26 erzeugt wird. Hierdurch wird der Klebstoff zwischen Schalfolie und Schaltafel erwärmt und somit bei einer Temperatur von beispielsweise 120° C deaktiviert. Die Schalfolie 22 lässt sich nun von der Schaltafel 211 lösen.

Das mechanische Trennen der Schalfolien von den Schaltafeln geschieht mit Hilfe des Gurtbandes. Das Gurtband 24 wird aus der Bewegungsrichtung des Förderbandes 201 mit einer Umlenkrolle 27 abgeleitet. Da das Gurtband 24 mit den Schalfolien 22 fest verbunden ist, folgen die Schalfolien der Umlenkbewegung des Gurtbandes 24 und werden von den Schaltafeln 21 abgeschält. Die Schaltafeln werden anschließend in nicht dargestellter Weise einer Wiederbeschichtung zugeführt.

Eine Wiederbeschichtung der Schaltafeln erfolgt in der oben beschriebenen Weise.

Die Erfindung ist vorstehend in Verbindung mit einer Schaltafel beschrieben. Die Erfindung ist aber ebenso bei anderen Tafeln anwendbar, die am Bau benutzt werden, beispielsweise Belagplatten für Baugerüste.

Überraschend wurde in einer weiteren Ausgestaltung der Erfindung gefunden, dass eine Polypropylenfolie auch ohne Vorbehandlung mit dem erfindungsgemäßen Kleber verbunden werden kann. Es ist bekannt, dass sich Polypropylen nicht ohne geeignete Vorbehandlung verkleben lässt. Daher ist der Fachmann der Ansicht, eine Polypropylenfolie müsse zunächst durch eine Primer-Vorbehandlung oder eine Corona-Vorbehandlung vorbehandelt werden. Überraschend hat sich gezeigt, dass der feuchtigkeitsreaktive Schmelzklebstoff auf Polyolefimbasis direkt ohne Vorbehandlung aufgebracht werden kann. Darüber hinaus ist es überraschend, dass sich der Kleber nicht wieder von der Polypropylenfolie löst, wenn diese auf den Träger aufgeklebt wird. Der Fachmann hätte nämlich vermutet, dass sich bei diesem erneuten Erhitzungsvorgang der auf der Folie zuvor aufgebrachte Schmelzklebstoff nicht wieder reaktivieren lässt, um sich dann mit dem Träger zu verbinden und dass daher das Verfahren bzw. die Vorrichtung nicht bestimmungsgemäß funktioniert.

Um die vorkonfektionierte Folie 6, auch Deckfolie oder Schalfolie zur Unterscheidung von einer mit dem Träger dauerhaft und unlösbar verbundenen Folie 8 genannt, mit der Platte zu verbinden, wird die Folie in einem schrägen Winkel der Platte zugeführt. Innerhalb dieses schrägen Winkels befindet sich ein Infrarot-Heizstrahler. Dieses Heizelement heizt auf der einen Seite die Unterseite der Folie auf, die den Kleber aufweist. Auf der anderen Seite wird die Oberfläche der Platte vorgewärmt. Der Schmelzkleber ist so gewählt, dass die Reaktionstemperatur bzw. Aufweichtemperatur unterhalb der Temperatur liegt, bei der Polypropylen aufweichen würde. Polypropylen schmilzt bei 165°C. Der Schmelzkleber schmilzt typischerweise in einer vorteilhaften Ausführungsform bei ca. 130°C. Die Heizleistung ist so gewählt, dass einerseits der Schmelzkleber erweicht und andererseits die Polypropylenoberfläche nicht schmilzt.

Die Folie wird zusammen mit der Platte einer Bandpresse oder einer Walzenpresse zugeführt. Hier wird die Folie mit der Platte verschweißt.

Um die Folie später wieder lösen zu können, wird zunächst die Oberfläche ebenfalls erwärmt. Ein Anfang der Folie wird gelöst, indem ein Saugelement aufgesetzt wird und mit Hilfe des Saugelementes die Folie bzw. der Beginn der Folie abgezogen wird. Anschließend kann die Folie mit mechanischen Greifelementen z. B. pneumatisch-hydraulisch betätigt, komplett abgezogen werden. Das Greifelement kann beispielsweise durch Ansaugen greifen. Ein solches saugendes Greifelement wird insbesondere eingesetzt, wenn die Folie derart in einem Rahmen eingesetzt ist, dass sie von der Seite nicht zugänglich ist

Der Wiederbeschichtungsprozeß kann kontinuierlich oder abschnittsweise /stückweise erfolgen. Es kommt ferner nicht darauf an, dass die Schalfolie bzw. - haut zerströrungsfrei vom Trägersystem bzw. der Schaltafel gelöst wird. Das Reinigen der Oberfläche des Trägersystems ist nicht zwingend nötig, insbesondere wenn z.B. der verbleibende Kleberrückstand beim erneuten Beschichten so weich wird, dass er die anliegende Folie nicht deformiert oder die Rückstände gering sind. Das Trägersystem kann durch Nieten, Schrauben oder auf sonstige geeignete Weise, insbesondere Verkleben oder formschlüssige Verbindung mit dem Rahmen verbunden sein. Es ist ferner vorteilhaft bei der Wiederbeschichtung des Trägers eine mit dem geeigneten Kleber beschichtete, d.h. vorkonfektionierte Folie zu verwenden. Die Beschichtungsvorrichtung benötigt in diesem Fall keine Mittel zum Aufbringen der Kleberschicht auf den Träger, wodurch die Anlage einfacher aufgebaut sein kann. Die Dosierung und das Aufbringen des Klebers auf die Folie kann daher preisgünstig und zentral erfolgen.

Es ist ferner wichtig, dass die Klebeschicht 10 (Fig. 3 und 4) jeweils aus Klebstoffen/Haftvermittlern besteht, die bei einer Temperatur von ca. 120°C-130°C unterhalb des Schmelz- oder Zersetzungsbereichs der Schalfolie oder des Trägersystems deaktiviert werden.

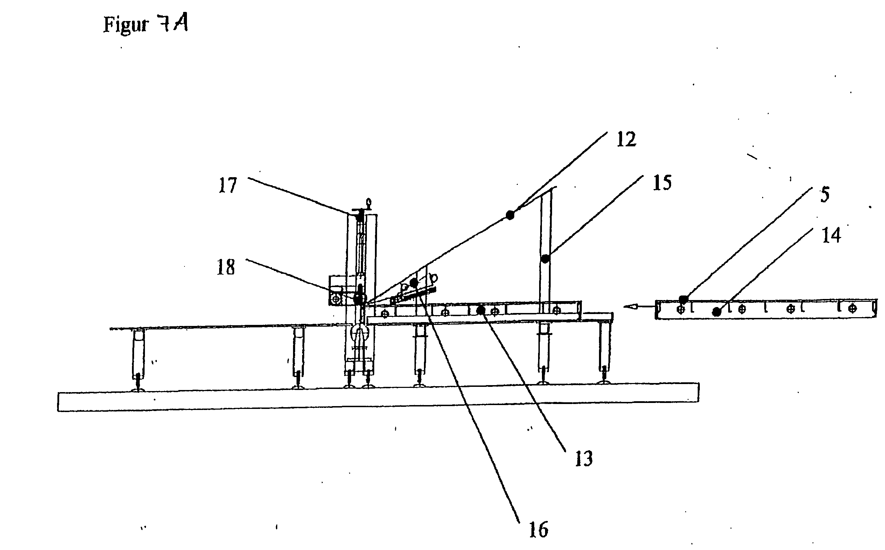

Figur 7A zeigt eine Neubeschichtungs- bzw. Wiederbeschichtungsanlage in der Vorderansicht mit der Modulrahmenschalungen mit Irägersystem einseitig mit einer Schalfolie 12 beschichtet werden, und

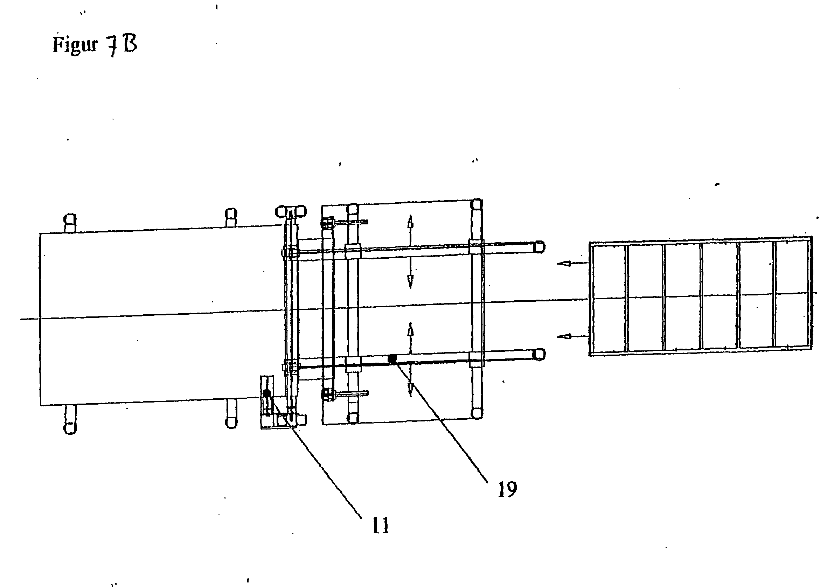

Figur 7B zeigt eine Neubeschichtungs- bzw. Wiederbeschichtungsanlage in der Draufsicht, mit der Modulrahmenschalungen mit Trägersystem einseitig mit einer Schalfolie 12 beschichtet werden.

Auf der abgebildeten Anlage werden die Schaltafeln 11 fortlaufend einseitig mit einer Schalfolie 12 beschichtet. Auf einer Zuführungsvorrichtung 15 werden die vorkonfektionierten und mit Kleber imprägnierten Schalfolien 12 abgelegt. Die Zufuhrung der einzelnen Schalfolien 12 folgt dem Prinzip einer schiefen Ebene. Im unteren Bereich werden die Schalfolien 12 durch eine Abstützung gegen Durchhängen aufgrund der Erwärmung gesichert.

Auf eine Rollenbahn 13 werden die mit dem Trägersystem 5 versehenen Modulrahmenschalungen 14 abgelegt. Ein genaues Anpassen der Anlage an die jeweiligen Abmessungen der Modulrahmenschalungen erfolgt mittels der Höhenverstellung 17 und der breitenvariablen Anschlag schiene 19.

Durch manuelles Heranfuhren der Modulrahmenschalung 14 in die Erwärmungszone, wird sowohl die Oberfläche des Trägersystems als auch der Klebstoff der Schalfolie mit Hilfe der Warmgasdusche erhitzt. Eine Warmgasdusche sorgt dafür, dass der Klebstoff eine ausreichende Temperatur aufweist, um zunächst die Haftung herbeizuführen, die zum Ablösen der Schalfolie, nachdem diese verschlissen ist, durch neue Wärmezufuhr wieder aufgehoben werden kann. Die Warmgasdusche ist in Form einer Schlitzdüse 16 ausgeführt.

Ist der Klebstoff im schmelzeflüssigen Zustand, wird die Schalfolie sowie die Modulrahmenschalung an die gummierte Andruckwalze 18 geschoben, welche bedingt durch einen separaten Antrieb 11 eine Vorschubbewegung durchführt. Schattafel und Modulrahmen mit Trägersystem laufen unter der Andruckwalze durch und werden somit miteinander verbunden. Anschließend werden die beschichteten Systeme der Anlage entnommen.

### Weiteres Beispiel

Das nachfolgende Beispiel zeigt die erfindungsgemäße Herstellung bzw. Wiederherstellung oder Erneuerung von Schalhäuten unter Verwendung einer Wederbeschichtungsvorrichtung nach Fig. 7a und 7b.

Bevor der eigentliche Arbeitsgang der Wiederbeschichtung durchgeführt wird, müssen folgende Vorarbeiten erfolgen:

Zum einen wird die vorkonfektionierte Schalfolie, d..h. die an die Fläche des plattenförmigen Trägers bereits angepasste Fläche der Schalfolie, mit Kleber benetzt. Hierzu wird vorzugsweise ein feuchtigkeitsreaktiver, d.h. ein bei Zufuhr von Feuchtigkeit, auch Luftfeuchtigkeit, vernetzender, Schmelzklebstoff auf Polyolefinbasis auf der PP-Folie appliziert. Mit diesem Klebstoffsystem ist eine Verklebung von PP-Substraten ohne Vorbehandlung (Plasma, Corona etc.) möglich. Feuchtigkeitsreaktive Schmelzklebstoffe weisen zwei Härtungsprozesse auf.

Ein im Sinne der Erfindung geeigneter und bevorzugter feuchtigkeitsreaktiver Schmelzkleber auf Polyolefinbasis ist der reaktive APAO-Hotmelt "Jowatherm-Reaktant ®" der Firma Jowat, Lobers u. Frank GmbH & Co KG, Detmold. Es handelt sich dabei um einen isocyanatfreien, feuchtigkeitsvernetzenden Schmelzklebstoff mit langer offener Zeit mit guter Adhäsion zu Kunststoffen, Glas und Keramik. Die Vernetzung erfolgt innerhalb von 7-14 Tagen in Abhängigkeit der Umgebungsfeuchtigkeit. Die Verarbeitungstemperatur beträgt 140 - 170 °C, die offene Zeit 120 Sek., die Abbindezeit ca. 25 Sek., die Viskosität (Brookfield Thermosel) bei 140 °C ca. 17.500 mPas, die Dichte ca. 0,89 g/cm³ und der Erweichungsbereich (Kofler) ca. 70 °C.

Durch das Abkühlen kommt es zunächst zu einem physikalischen Abbindevorgang durch Kristallisation; man erhält eine schnelle Handhabungsfestigkeit nach der Verklebung. Im zweiten Schritt findet eine Reaktion der Klebstoffpolymere mit Feuchtigkeit (Luft- bzw. Substratfeuchtigkeit) bzw. reaktiven Gruppen auf der Substratoberfläche statt. Dies fuhrt zu einer Vernetzung (chemische Härtung), wodurch sich die Klebstoffeigenschaften bezüglich Adhäsion und Kohäsion verbessern. Der Klebstoff wird mit einem gängigen Klebstoffauftragssystem (Walze, Düse) appliziert. Die Verarbeitungstemperatur liegt im Bereich von 120 - 180 °C, vorzugsweise 130°C.

Zum anderen wird das Trägersystem in die Modulrahmenschalung montiert. Gefugt werden die beiden Elemente mittels Niete oder Klebstoff, so dass eine plane Oberfläche entsteht. Das Trägersystem besteht aus einer Sandwichstruktur, welche im Kern aus einem geschlossenzelligen PP-Schaum, vorzugsweise mit einer Dichte von 200 bis 700 kg/m³, und einer beidseitig laminierten, bidirektional gewebten Glasfaserverstärkung versehen ist. Das Trägersystem, ein sogenannter Composite, wird in einer thermischen Doppelbandpresse hergestellt und entsprechend der benötigten Abmaße einer Modulrahmenschalung konfektioniert.

Der eigentliche Beschichtungs- bzw. Wiederbeschichtungsvorgang des Trägersystems mit der Schalfolie läuft wie folgt ab: Mit Hilfe eines Handhabungssystems wird eine Modulrahmenschalung mit dem gefügten Trägersystem auf einer Rollenbahn der Wiederbeschichtungsanlage positioniert. Des Weiteren wird die mit Kleber imprägnierte Schafolie in die Zufuhrvorrichtung eingelegt. Anschließend wird die Fügezone, d.h. der Kleber und die Deckschicht der Trägerplatte, erwärmt. Dies geschieht unter Verwendung eines Infrarot-Heizstrahlers zur Kontakt losen Erwärmung von Materialien, um die Klebezone geeignet vorzubereiten. Hierbei ist darauf zu achten, dass der Werkstoff des Trägersystems und der Schalfolie nicht thermisch geschädigt werden. Die auftretenden Temperaturen dürfen nicht über der Schmelztemperatur des eingesetzten Kunststoffs, hier im Beispiel Polypropylen, 165 °C liegen, Des Weiteren würde ein Auf- bzw. Anschmelzen des Randbereichs der Trägerplatte das Lösen der Verstärkungsfasern aus der Matrix bedeuten. Nach dem Anwärmen wird die separat zugeführte Schalfolie aus dem Werkstoff Polypropylen mit einer gummierten Andruckwalze unter definiertem Anpressdruck auf das Trägersystem laminiert. Die Relativbewegung der Andruckwalze realisiert gleichzeitig die Vorschubbewegung der Modulrahmenschalung während des Laminiervorganges. Anschließend lässt man der Klebezone genügend Zeit zum Relaxieren. Die neubeschichtete- bzw. wiederbeschichtete Modulrahmenschalung wird aus der Vorrichtung entnommen. Der Ablauf eines Laminiervorganges erfolgt zyklisch.

Der Ablösevorgang, die Delaminierung, der Schalfolie vom Trägersystem erfolgt in umgekehrter Reihenfolge. Hierzu wird, mit Hilfe eines Handhabungssystems, die mit dem Trägersystem versehene Modulrahmenschalung einer Rollenbahn der Ablöseeinheit zugeführt. Die Klebezone zwischen Schalfolie und Trägersystem wird mittels eines Infrarot-Heizstrahlers erwärmt. Durch die gezielte Erwärmung des Klebers wird dieser, ab einer Temperatur, welche unter der Schmelztemperatur des PP liegen muss, vorzugsweise 120 - 140 °C, aufgrund der Minimierung der Kohäsionskraft des Klebers, deaktiviert. In dem so angelösten Randbereich kann manuell eine Vorrichtung eingebracht werden, mit der es möglich ist, die Schalfolie zu greifen, um diese von dem Trägersystem abzuziehen. Simultan zu diesem Greifvorgang wird die Fügezone zwischen Schalfolie und Trägerplatte im Restbereich vorgewärmt, Wenn sichergestellt ist, dass das Greifsystem die Folie entgegen den noch wirkenden Haftkräften von dem Trägersystem ablösen kann, erfährt die Modulrahmenschalung eine Vorschubbewegung entgegengesetzt zur Abziehrichtung der Folie. Hierbei ist darauf zu achten, dass die Warmgasdusche permanent den Kleber in der Fügezone erwärmt und somit deaktiviert. Nachdem die Schalfolie von dem Trägersystem abgelöst wurde kann, die Modulrahmenschalung aus der Ablöseeinheit entnommen werden und einem Wiederbeschichtungsprozess zugeführt werden. Der Ablauf eines Delaminiervorganges erfolgt zyklisch.

Ein kontinuierlicher Delaminierungsvorgang wird im folgenden dargestellt. Hierzu werden die Trägersysteme auf einem Förderband der Ablöseeinheit zugeführt. Unter Zuhilfenahme einer Warmgasdusche werden die Schalfolien von der Oberfläche her erwärmt, um die Klebezone für den Auftrag eines Gurtbandes geeignet vorzubereiten. Das Gurtband ist ein wichtiges Hilfsmittel, welches den Ablösevorgang der Schalfolie von dem Trägersystem ermöglicht. Dies geschieht, indem das Gurtband von einer Vorratsrolle nach der Warmgasdusche der Schalfolie zugeführt und mit der Schalfolie gefügt wird. Hierbei sorgen Andruckwalzen für den notwendigen Verbund zwischen dem Gurtband und der Schalfolie.

Nach dem Aufbringen des Gurtbandes durchläuft das System aus Schalfolie und Träger ein IR-Bestrahlungsfeld, was zur Folge hat, dass sich die Klebeschicht zwischen, Schalfolie und Trägersystem auf 120°C - 140°C erhitzt und somit deaktiviert wird. Bei allen thermischen Prozessen ist darauf zu achten, dass die Temperatur so gewählt wird, dass die Werkstoffe des Trägersystems und der Schalfolie nicht geschädigt werden, aber die Klebeschicht deaktiviert wird. Die angegebenen Temperaturen sind daher beispielhaft für die gewählten Materialien,

Mit Hilfe des Gurtbandes wird nun die Schalfolie von dem Trägersystem abgelöst und über eine Umlenkwalze abgeleitet. Das entschichtete Trägersystem kann nun der Vorrichtung entnommen und einer erneuten Beschichtung zugeführt werden.

## Patentansprüche

1. Schalungselement, mit einem plattenförmigen Träger (2;7), derart ausgestaltet, dass er die erforderliche Tragfähigkeit zum Errichten von Betonbauwerken liefert und einer Schalfolie, die derart ausgeblidet ist, dass sie die Kontaktfläche zum Beton bilden kann,
**dadurch gekennzeichnet,**
**dass** der Träger (2;7) wenigstens auf einer Seite mit der Schalfolie (3;6) überdeckt ist, die mittels unter Wärmeeinfluß deaktivierbarem Klebstoff (4; 10) auf dem Träger (2;7) auswechselbar befestigt ist, wobei beim Deaktivieren der Kleber in einen schmelzflüssigen Zustand bringbar ist.

2. Schalungselement nach Anspruch 1, **dadurch gekennzeichnet, dass** der plattenförmige Träger (2,7) beidseitig mit einer auswechselbaren Schalfolie (3;6) bedeckt bzw, beschichtet ist.

3. Schalungselement nach Anspruch 1 oder 2, **dadurch gekennzeichnet, dass** der plattenförmige Träger (2;7) wenigstens auf einer Seite mit einer verstärkungsschicht (8) versehen Ist , die auf den Träger aufgeklebt ist und auf der die die Oberfläche des Systems bildende Schalfolie (3;6) mittels des Klebstoffs (4;10) lösbar bzw. auswechselbar angeordnet ist,

4. Schalungselement nach Anspruch 3, **dadurch gekennzeichnet, dass** der die Verstärkungsschicht (8) auf dem plattenförmigen Träger (2;7) haltende Kleber (9) bei einer höheren Temperatur als der die äußere Schalfolie (3;6) haltende Klebstoff (4;10) deaktivierbar ist.

5. Schalelement nach einem der vorherigen Ansprüche, bei dem der plattenförmige Träger einen Kern (7) aus Kunststoff aufweist, wobei zu einer oder beiden Selten des Kerns eine Verstärkungsschicht (8) mit Fasern vorgesehen ist, die Fasern ganz oder überwiegend aus Faserfäden bestehen, die sich über die gesamte Länge des Trägers erstrecken.

6. Schalelement nach Anspruch 5, **dadurch gekennzeichnet, dass** die Fasern Glasfasern, PP-Föden und/oder ein Fasergewebe, dass aus Glasfasern und PP-Fäden gewoben ist umfasst und/oder die Faserfäden als Matte angeordnet sind.

7. Schalelement nach Anspruch 5 oder 6, **dadurch gekennzeichnet, dass** der Kern (7) aus Schaummaterial und/oder Polypropylen besteht.

8. Schalelement nach einem der Ansprüche 5 bis 7, **dadurch gekennzeichnet**, die Verstärkungsschicht eine Folie (8), insbesondere einer Folie aus Polpropylen, umfasst, und/oder die Folie die Oberfläche des Trägers bildet und die Folie mit dem Träger verschweißt oder verklebt ist,

9. Schalelement nach Anspruch 8, **dadurch gekennzeichnet, dass** die Fasern zwischen der Folie und dem Träger angeordnet sind.

10. Verfahren zum Herstellen und Reparieren von Schalungselementen nach einem der Ansprüche 1 bis 9, wobei auf den plattenförmigen Träger (2;7) die die Oberfläche bildende Schalfolie (3;6;) aus Kunststoff mittels Wärmeeinfluss durch Bringen In einen schmelzflüssigen Zustand deaktiviert und vom Träger (2;7: 11 ; 211) gelöst und entfernt wird.

11. Verfahren nach Anspruch 10, **dadurch gekennzeichnet, dass** die Schalfolie (3;6;22) mit Klebstoff (4; 10) beschichtet von einer Vorratsrolle (15) herangeführt und der Klebstoff (4;10) vor dem Aufbringen der Schalfolie (3;6; 22) auf den Träger (2; 7;11;211) durch Wärmeeinfluss aktiviert und die Schaffolie (3;6; 22) sodann auf den Träger (2; 7; 11; 211) aufgedrückt wird.

12. Verfahren nach Anspruch 10 oder 11, **dadurch gekennzeichnet, dass** die Schalfolie (3;6; 22) mittels Druckwalzen (16; 18) und einer Konfektioniereinrichtung (19) dauerhaft und unverrückbar mit dem Träger (3; 7; 11; 211) verbunden wird.

13. Verfahren nach einem der vorherigen Ansprüche, **dadurch gekennzeichnet, dass** zum Ablösen der verschlissenen und somit auszuwechselnden Schalfolie (3; 6; 22) auf die Oberfläche der Schalfolie (3; 6; 22) ein an seiner Oberfläche erwärmtes Gurtband (24) geleitet und sodann das Ganze mittels IR-Strahlern (26) erwärmt wird, um den die Schalfolie (3;6;22) auf dem Träger (2; 7; 11; 211) haltenden Klebstoff (4; 10) zu deaktivieren, woraufhin das Gurtband (24) mit der Schalfolie (3; 6; 22) vom Träger (2; 7; 11; 211) abgezogen wird.

14. Verfahren nach einem der vorherigen Ansprüche, **dadurch gekennzeichnet, dass** Träger (2; 7; 11; 211) kontinuierlich mit einer als Oberfläche dienenden Schalfolie (3; 6; 22) beschichtet werden und die als Oberflächenbeschichtung dienenden Folien (3;6; 22) auch kontinuierlich von einer Anzahl von Trägern (2; 7; 11; 211) abgelöst werden.

15. Verfahren nach einem der vorherigen Ansprüche, **dadurch gekennzeichnet, dass** die Schalfolie (3;6;22) mit dem Klebstoff (4;10) beschichtet von einer Vorratsrolle (15) herangeführt und der Klebstoff (4;10) vor dem Aufbringen der Schalfolie (3;6; 22) auf den Träger (2; 7;11;211) durch Wärmeeinfluss aktiviert und die Schalfolie (3;6; 22) sodann auf den Träger (2; 7; 11;211) aufgedrückt wird.

16. Verfahren nach einem der vorherigen Ansprüche, **dadurch gekennzeichnet, dass** Schalfolie (3;6; 22) mittels Druckwalzen (16;18) und einer Konfektioniereinrichtung (19) dauerhaft und unverrückbar mit dem Träger (3; 7; 11; 211) verbunden wird.

17. Verfahren nach einem der vorherigen Ansprüche, **dadurch gekennzeichnet, dass** zum Ablösen der verschlissenen und somit auszuwechselnden Schalfolie (3; 6; 22) auf die Oberfläche der Schalfolie (3; 6; 22) ein an seiner Oberfläche erwärmtes Gurtband (24) geleitet und sodann das Ganze mittels IR-Strahlern (26) erwärmt wird, um den die Schalfolie (3;6;22) auf dem Träger (2; 7; 11; 211) haltenden Klebstoff (4; 10) zu deaktivieren, woraufhin das Gurtband (24) mit der Schalfolie (3; 6; 22) vom Träger (2; 7; 11; 211) abgezogen wird.

18. Verfahren nach einem der vorherigen Ansprüche, **dadurch gekennzeichnet, dass** auf die Schalfolie (3;6; 22) aus Polypropylen eine Kleberschicht aus einem feuchtigkeitsreaktiven Schmelzkleber auf Polyolefinbasis, insbesondere Jowatherm-Reaktant ®, aufgebracht wird, ohne eine vorherige oberflächenaufbrechende Vorbehandlung der Deckschicht, insbesondere durch eine Primer- oder Corona-Vorbehandlung.

19. Verwendung einer Schalfolie zur Herstellung oder Reparatur eines Schalelements, wobei die Folie mit einem unter Wärmeeinfluss deaktivierbaren Klebstoff beschichtet ist.

## Claims

1. Formwork element comprising a plate-shaped carrier (2; 7) configured such that it provides the bearing capacity required for erecting concrete buildings, and a formwork foil configured such that it is capable of forming the contact surface towards the concrete,
**characterised in that**
the carrier (2; 7) is covered on at least one side with the formwork foil (3; 6), which is exchangeably attached to the carrier (2; 7) by means of an adhesive (4; 10) deactivatable under the influence of heat, wherein the adhesive can be brought into a molten state during deactivation.

2. Formwork element according to claim 1, **characterised in that** the plate-shaped carrier (2, 7) is covered or coated on both sides with an exchangeable formwork foil (3; 6).

3. Formwork element according to claim 1 or 2, **characterised in that** the plate-shaped carrier (2; 7) is provided on at least one side with a reinforcement layer (8) which is glued onto the carrier and on which the formwork foil (3; 6) forming the surface of the system is detachably or exchangeably disposed by means of the adhesive (4; 10).

4. Formwork element according to claim 3, **characterised in that** the adhesive (9) retaining the reinforcement layer (8) on the plate-shaped carrier (2; 7) can be deactivated at a higher temperature than the adhesive (4; 10) retaining the outer formwork foil (3; 6).

5. Formwork element according to any one of the preceding claims, wherein the plate-shaped carrier comprises a core (7) of plastic, wherein a reinforcement layer (8) comprising fibres is provided on one or both sides of the core, the fibres entirely or for the most part consist of fibre threads extending over the entire length of the carrier.

6. Formwork element according to claim 5, **characterised in that** the fibres include glass fibres, PP threads and/or a fibre fabric woven from glass fibres and PP threads and/or that the fibre threads are arranged as a mat.

7. Formwork element according to claim 5 or 6, **characterised in that** the core (7) consists of foamed material and/or polypropylene.

8. Formwork element according to any one of the claims 5 to 7, **characterised in that** the reinforcement layer comprises a foil (8), in particular a foil of polypropylene, and/or that the foil forms the surface of the carrier and that the foil is welded or glued to the carrier.

9. Formwork element according to claim 8, **characterised in that** the fibres are disposed between the foil and the carrier.

10. Method for producing and repairing formwork elements according to any one of the claims 1 to 9, wherein on the plate-shaped carrier (2; 7) the formwork foil (3; 6) of plastic forming the surface is deactivated under the influence of heat by bringing it into a molten state and is detached and removed from the carrier (2; 7; 1 1 ; 211).

11. Method according to claim 10, **characterised in that** the formwork foil (3; 6; 22), coated with adhesive (4; 10), is fed from a supply roll (1 5) and that the adhesive (4; 10) is activated by the influence of heat prior to the application of the formwork foil (3; 6; 22) onto the carrier (2; 7; 1 1 ; 211) and that the formwork foil (3; 6; 22) is then pressed onto the carrier (2; 7; 1 1 ; 211).

12. Method according to claim 1 0 or 11, **characterised in that** the formwork foil (3; 6; 22) is permanently and immovably joined to the carrier (3; 7; 1 1 ; 211) by means of pressure rollers (1 6; 1 8) and an assembling device (19).

13. Method according to any one of the preceding claims, **characterised in that**, in order to detach the formwork foil (3; 6; 22) that is worn and thus to be replaced, a belt webbing (24) heated on its surface is guided onto the surface of the formwork foil (3; 6; 22) and that then, the entire ensemble is heated by infrared radiators (26) in order to deactivate the adhesive (4; 1 0) retaining the formwork foil (3; 6; 22) on the carrier (2; 7; 1 1 ; 211), whereupon the belt webbing (24) is pulled off together with the formwork foil (3; 6; 22) from the carrier (2; 7; 1 1 ; 211).

14. Method according to any one of the preceding claims, **characterised in that** carriers (2; 7; 1 1 ; 211) are continuously coated with a formwork foil (3; 6; 22) serving as a surface and that the foils (3; 6; 22) serving as surface coatings are also continuously detached from a number of carriers (2; 7; 1 1 ; 211).

15. Method according to any one of the preceding claims, **characterised in that** the formwork foil (3; 6; 22), coated with the adhesive (4; 10), is fed from a supply roll (1 5) and that the adhesive (4; 1 0) is activated by the influence of heat prior to the application of the formwork foil (3; 6; 22) onto the carrier (2; 7; 1 1 ; 211) and that the formwork foil (3; 6; 22) is then pressed onto the carrier (2; 7; 11; 211).

16. Method according to any one of the preceding claims,
**characterised in that** formwork foil (3; 6; 22) is permanently and immovably joined to the carrier (3; 7; 1 1 ; 211) by means of pressure rollers (16; 18) and an assembling device (19).

17. Method according to any one of the preceding claims, **characterised in that**, in order to detach the formwork foil (3; 6; 22) that is worn and thus to be replaced, a belt webbing (24) heated on its surface is guided onto the surface of the formwork foil (3; 6; 22) and that then, the entire ensemble is heated by infrared radiators (26) in order to deactivate the adhesive (4; 10) retaining the formwork foil (3; 6; 22) on the carrier (2; 7; 1 1 ; 211), whereupon the belt webbing (24) is pulled off together with the formwork foil (3; 6; 22) from the carrier (2; 7; 1 1 ; 211).

18. Method according to any one of the preceding claims, **characterised in that** an adhesive layer of a moisture-reactive polyolefin-based hot-melt adhesive, in particular Jowatherm-Reaktant ®, is applied onto the formwork foil (3; 6; 22) of polypropylene without a prior surface-disrupting pre-treatment of the cover layer, in particular by a primer or corona pre-treatment.

19. Use of a formwork foil for producing or repairing a formwork element, wherein the foil is covered with an adhesive that can be deactivated under the influence of heat.

## Revendications

1. Élément de coffrage, comprenant un support en forme de plaque (2 ; 7) réalisé de telle sorte qu'il procure la capacité de charge requise pour ériger des constructions en béton, et une feuille de coffrage qui est réalisée de telle sorte qu'elle peut former la surface de contact avec le béton, **caractérisé en ce que** le support (2 ; 7) est recouvert, au moins sur un côté, avec la feuille de coffrage (3 ; 6) qui est fixée sur le support (2 ; 7), de manière à pouvoir être remplacée, au moyen d'un adhésif (4 ; 10) qui peut être désactivé sous l'effet de la chaleur, l'adhésif pouvant être amené dans un état en fusion lors de la désactivation.

2. Élément de coffrage selon la revendication 1, **caractérisé en ce que** le support en forme de plaque (2 ; 7) est recouvert, respectivement enduit des deux côtés avec une feuille de coffrage (3 ; 6) qui peut être remplacée.

3. Élément de coffrage selon la revendication 1 ou 2, **caractérisé en ce que** le support en forme de plaque (2 ; 7) est muni, au moins sur un côté, d'une couche de renforcement (8) qui est collée sur le support et sur laquelle vient se disposer la feuille de coffrage (3 ; 6) formant la surface du système, de manière amovible, respectivement de façon à pouvoir être remplacée, au moyen de l'adhésif (4 ; 10).

4. Élément de coffrage selon la revendication 3, **caractérisé en ce que** l'adhésif (9) qui maintient la couche de renforcement (8) sur le support en forme de plaque (2 ; 7) peut être désactivé à une température supérieure à celle de l'adhésif (4 ; 10) qui maintient la feuille de coffrage externe (3 ; 6).

5. Élément de coffrage selon l'une quelconque des revendications précédentes, dans lequel le support en forme de plaque présente une partie centrale (7) en matière synthétique, une couche de renforcement (8) comprenant des fibres étant prévue sur un côté ou sur les deux côtés de la partie centrale, les fibres étant constituées en tout ou à titre principal par des fils fibreux qui s'étendent sur toute la longueur du support.

6. Élément de coffrage selon la revendication 5, **caractérisé en ce que** les fibres comprennent des fibres de verre, des fils en PP et/ou un tissu fibreux qui a été tissé à partir de fibres de verre et de fils PP, et/ou les fils fibreux sont disposés de façon à former un mat.

7. Élément de coffrage selon la revendication 5 ou 6, **caractérisé en ce que** la partie centrale (7) est constituée d'une matière en mousse et/ou de polypropylène.

8. Élément de coffrage selon l'une quelconque des revendications 5 à 7, **caractérisé en ce que** la couche de renforcement comprend une feuille (8), en particulier une feuille en polypropylène, et/ou la feuille forme la surface du support, et la feuille est soudée ou collée au support.

9. Élément de coffrage selon la revendication 8, **caractérisé en ce que** les fibres sont disposées entre la feuille et le support.

10. Procédé pour la fabrication et la réparation d'éléments de coffrage selon l'une quelconque des revendications 1 à 9, dans lequel, sur le support (2 ; 7) en forme de plaque, la feuille de coffrage (3 ; 6) en matière synthétique, formant la surface, est désactivée sous l'influence de la chaleur en l'amenant dans un état en fusion, et est séparée et éloignée du support (2 ; 7 ; 11; 211).

11. Procédé selon la revendication 10, **caractérisé en ce que** la feuille de coffrage (3 ; 6 ; 22) enduite d'un adhésif (4 ; 10) est amenée à partir d'un rouleau d'alimentation (15) et l'adhésif (4 ; 10), avant l'application de la feuille de coffrage (3 ; 6 ; 22) sur le support (2 ; 7 ; 11 ; 211) est activé sous l'effet de la chaleur, avant de comprimer la feuille de coffrage (3 ; 6 ; 22) sur le support (2 ; 7 ; 11 ; 211).

12. Procédé selon la revendication 10 ou 11, **caractérisé en ce que** la feuille de coffrage (3 ; 6 ; 22) est reliée au support (3 ; 7 ; 11 ; 211) d'une manière durable et immuable au moyen de cylindres de pression (16 ; 18) et au moyen d'un dispositif d'assemblage (19).

13. Procédé selon l'une quelconque des revendications précédentes, **caractérisé en ce que**, pour détacher la feuille de coffrage (3 ; 6 ; 22) usée, et par conséquent à remplacer, on guide, sur la surface de la feuille de coffrage (3 ; 6 ; 22) une courroie chauffée (24) et l'ensemble est ensuite chauffé au moyen de rayons IR (26) afin de désactiver l'adhésif (4 ; 10) qui maintient la feuille de coffrage (3 ; 6 ; 22) sur le support (2 ; 7 ; 11 ; 211) ; après quoi, la courroie (24) est retirée du support (2 ; 7 ; 11 ; 211) conjointement avec la feuille de coffrage (3 ; 6 ; 22).

14. Procédé selon l'une quelconque des revendications précédentes, **caractérisé en ce que** le support (2 ; 7 ; 11 ; 211) est enduit en continu avec une feuille de coffrage (3 ; 6 ; 22) faisant office de surface et les feuilles, (3 ; 6 ; 22) faisant office d'enduction superficielle sont également détachées en continu d'une série de supports (2 ; 7 ; 11 ; 211).

15. Procédé selon l'une quelconque des revendications précédentes, **caractérisé en ce que** la feuille de coffrage (3 ; 6 ; 22) enduite avec l'adhésif (4 ; 10) est amenée à partir d'un rouleau d'alimentation (15) et l'adhésif (4 ; 10) est activé sous l'effet de la chaleur avant l'application de la feuille de coffrage (3 ; 6 ; 22) sur le support (2 ; 7 ; 11 ; 211), avant de comprimer la feuille de coffrage (3 ; 6 ; 22) sur le support (2 ; 7 ; 11 ; 211).

16. Procédé selon l'une quelconque des revendications précédentes, **caractérisé en ce que** la feuille de coffrage (3 ; 6 ; 22) est reliée au support (3 ; 7 ; 11 ; 211) d'une manière durable et immuable au moyen de cylindres de pression (16 ; 18) et au moyen d'un dispositif d'assemblage (19).

17. Procédé selon l'une quelconque des revendications précédentes, **caractérisé en ce que**, pour détacher la feuille de coffrage (3 ; 6 ; 22) usée, et par conséquent à remplacer, on guide, sur la surface de la feuille de coffrage (3 ; 6 ; 22) une courroie chauffée (24) et l'ensemble est ensuite chauffé au moyen de rayons IR (26) afin de désactiver l'adhésif (4 ; 10) qui maintient la feuille de coffrage (3 ; 6 ; 22) sur le support (2 ; 7 ; 11 ; 211) ; après quoi, la courroie (24) est retirée du support (2 ; 7 ; 11 ; 211) conjointement avec la feuille de coffrage (3 ; 6 ; 22).

18. Procédé selon l'une quelconque des revendications précédentes, **caractérisé en ce qu'**on applique, sur la feuille de coffrage (3 ; 6 ; 22) en polypropylène, une couche adhésive constituée d'un adhésif thermofusible qui réagit à l'humidité, à base de polyoléfine, en particulier du Jowatherm-Reaktant®, sans soumettre la couche de recouvrement à un traitement préalable de rupture superficielle, en particulier via un prétraitement à l'aide d'une couche de fond ou via un prétraitement de type corona.

19. Utilisation d'une feuille de coffrage pour la fabrication ou pour la réparation d'un élément de coffrage, la feuille étant enduite d'un adhésif apte à être désactivé sous l'effet de la chaleur.
